(19) **Europäisches Patentamt / European Patent Office / Office européen des brevets**

(11) **EP 4 611 057 A1**

(12) **EUROPEAN PATENT APPLICATION**
published in accordance with Art. 153(4) EPC

(43) Date of publication:
**03.09.2025 Bulletin 2025/36**

(21) Application number: **23929340.0**

(22) Date of filing: **30.03.2023**

(51) International Patent Classification (IPC):
**H01M 4/136** (2010.01)

(52) Cooperative Patent Classification (CPC):
**H01M 4/136; Y02E 60/10**

(86) International application number:
**PCT/CN2023/085249**

(87) International publication number:
**WO 2024/197745 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
• **WANG, Hong**
**Ningde, Fujian 352100 (CN)**
• **LIU, Jiang**
**Ningde, Fujian 352100 (CN)**
• **HUANG, Ying**
**Ningde, Fujian 352100 (CN)**
• **KANG, Shaohong**
**Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **LITHIUM SECONDARY BATTERY AND ELECTRIC DEVICE**

(57) The present application discloses a lithium secondary battery and an electric device. The lithium secondary battery comprises a positive electrode sheet and a negative electrode sheet; a positive electrode active material layer comprises a positive electrode active material $Li_{1+a}M1_bFe_{1-c}AcP_{1-d}E_dO_4$ having a mass ratio of not less than 85 wt%; a negative electrode active material layer comprises graphite having a mass ratio of not less than 85 wt%; the surface density of the positive electrode active material layer located on a single side of the positive electrode sheet is $CW_c$, with a unit of g/1540.25 mm2, and the reversible lithium capacity thereof is $D_c$, with a unit of mAh/1540.25 mm2; the reversible lithium capacity of the negative electrode active material layer on the side of the negative electrode sheet facing the positive electrode sheet is $D_a$, with a unit of mAh/1540.25 mm2; the initial lithium-intercalation capacity of the negative electrode active material layer on the side of the negative electrode sheet facing away from the positive electrode sheet is $C_a$, with a unit of mAh/1540.25 mm2; the conductivity of an electrolyte in the lithium secondary battery at 25°C is $\rho$, with a unit of S/cm; the lithium secondary battery satisfies: Formula 1: $1.0337+0.37 \times CW_c - 7.79 \times \rho \le K1 \le 1.07+0.93 \times CW_c - 2.9 \times \rho$; and/or, Formula 2: $1.1485+0.43 \times CWC - 9.2 \times \rho = K2 \le 1.13+1.069 \times CW_c - 1.7 \times \rho$; wherein, (a).

**FIG. 3**

Processed by Luminess, 75001 PARIS (FR)

## Description

### TECHNICAL FIELD

The present application belongs to the technical field of batteries, and in particular to a positive electrode plate, a lithium secondary battery and an electrical apparatus.

### BACKGROUND

Lithium-ion batteries have characteristics of green, environmental protection, high energy, low carbon etc., are not only applied in energy storage power source systems such as hydraulic, thermal, wind and solar power stations, but also widely applied in electric vehicles such as electric bicycles, electric motorcycles and electric cars, as well as military equipment, aerospace and the like fields. With the development of current society, people's requirements for lithium-ion batteries are getting higher and higher. Life is a key performance indicator of lithium-ion batteries, and the demand for long life is particularly prominent in the energy storage field.

### SUMMARY OF THE INVENTION

In view of the technical problems existed in the background technology, the present application provides a lithium secondary battery, aiming to improve the battery life on the basis of the same positive and negative electrodes, electrolyte solution, and separator materials.

To achieve the aforementioned objective, a first aspect of the present application provides a lithium secondary battery, which includes:

a positive electrode plate including a positive-electrode current collector and a positive-electrode active material layer arranged on at least one side of the positive-electrode current collector, wherein the positive-electrode active material layer includes a positive-electrode active material $Li_{1+a}M_{1b}Fe_{1-c}A_cP_{1-d}E_dO_4$, wherein $-0.100 \leq a \leq 0.100$, $0 \leq b \leq 1.1$, $0 \leq c \leq 1$, $0 \leq d \leq 0.100$, $M_1$ includes one or more elements selected from Zn, Al, Na, K, Mg, Nb, Mo and W, A includes one or more elements selected from Mn, Zn, Al, Na, K, Mg, Mo, W, Ti, V, Zr, Ga, Sn, Sb, Nb and Ge, E includes one or more elements selected from B, Si, N, S, F, Cl and Br, and a mass ratio of the $Li_{1+a}M_{1b}Fe_{1-c}A_cP_{1-d}E_dO_4$ in the positive-electrode active material layer is not less than 85 wt%;

a negative electrode plate including a negative-electrode current collector and a negative-electrode active material layer arranged on at least one side of the negative-electrode current collector, wherein the negative-electrode active material layer includes graphite, and a mass ratio of the graphite in the negative-electrode active material layer is not less than 85 wt%,

wherein the positive-electrode active material layer located on a single side of the positive electrode plate has an areal density of CWc in g/1540.25 $mm^2$, and a reversible lithium capacity of Dc in mAh/1540.25 $mm^2$; the negative-electrode active material layer on the side of the negative electrode plate facing the positive electrode plate has a reversible lithium capacity of Da in mAh/1540.25 $mm^2$; the negative-electrode active material layer on the side of the negative electrode plate away from the positive electrode plate has a first lithiation capacity of Ca in mAh/1540.25 $mm^2$; and the lithium secondary battery satisfies:

$$\text{equation 1: } 1.0337 + 0.37 \times CWc - 7.79 \times \rho \leq K_1 \leq 1.07 + 0.93 \times CWc - 2.9 \times \rho;$$

and/or,

$$\text{equation 2: } 1.1485 + 0.43 \times CWc - 9.2 \times \rho \leq K_2 \leq 1.13 + 1.069 \times CWc - 1.7 \times \rho;$$

wherein $K_1 = \dfrac{Da}{Dc}$, $K_2 = \dfrac{Ca}{Dc}$, and $\rho$ is the conductivity of an electrolyte solution of the lithium secondary battery at 25°C, in S/cm.

Compared with the prior art, the lithium secondary battery of the first aspect of the present application has at least the following beneficial effects: (1) the utilization of the positive-electrode active material $Li_{1+a}M_{1b}Fe_{1-c}A_cP_{1-d}E_dO_4$ is conducive to improving a cycle life of the battery; (2) although currently the mechanism is not clear, for a battery system composed of the $Li_{1+a}M_{1b}Fe_{1-c}A_cP_{1-d}E_dO_4$ and graphite in the present application, when at least one of the aforementioned equations 1 and 2 is satisfied, the cycling performance of the battery can be further improved on the basis of the same positive and negative electrodes, electrolyte solution, and separator materials, and the service life of the battery is extended, so that the life of a battery cell reaches a better level.

In some embodiments of the present application, the $Li_{1+a}M_{1b}Fe_{1-c}A_cP_{1-d}E_dO_4$ includes at least one of positive-electrode active materials corresponding to the following three conditions: (1) $c = 0$; (2) $c = 1$, and A is Mn element; and (3) $0 < c < 1$, and A is Mn element.

In some embodiments of the present application, the $Li_{1+a}M_{1b}Fe_{1-c}A_cP_{1-d}E_dO_4$ includes $LiFe_{1-c}Mn_cPO_4$, wherein $0 \le c \le 1$.

In some embodiments of the present application, $0.25 \le CWc \le 0.6$, optionally, $0.26 \le CWc \le 0.5$. Controlling CWc to satisfy a given range is beneficial to significantly improving the cycle life of the lithium secondary battery.

In some embodiments of the present application, a value range of $\rho$ is 0.008-0.020, optionally 0.009-0.016. Controlling the conductivity of the electrolyte solution within a given range is beneficial to improving the kinetic performance of the lithium secondary battery and obtaining a further increased service life.

In some embodiments of the present application, the viscosity of the electrolyte solution at 25°C is 1.5 mPa·s - 5 mPa·s, optionally 2 mPa·s - 4 mPa·s. Controlling the viscosity of the electrolyte solution within a given range is not only beneficial to obtaining a higher ion migration rate, but also beneficial to allowing the positive electrode plate and the negative electrode plate to be infiltrated by the electrolyte solution in a shorter time, thereby facilitating improvement of the overall performance of the lithium secondary battery.

In some embodiments of the present application, the negative-electrode active material layer on the side of the negative electrode plate facing the positive electrode plate has an areal density of CWa in $g/1540.25 \ mm^2$, wherein

$$1.6 \le \frac{CWc}{CWa} \le 6 \text{, optionally, } 1.8 \le \frac{CWc}{CWa} \le 3 \text{. By controlling the ratio of } \frac{CWc}{CWa} \text{ within a given range, it is beneficial to}$$

obtaining an improved cycle life, and it can further take into account both the energy density and cost of the lithium secondary battery, and can further optimize the energy density and cost on the basis of improving the service life of the lithium secondary battery.

In some embodiments of the present application, the positive-electrode active material in the positive-electrode active material layer further includes one or more of a ternary nickel-cobalt-manganese material, lithium cobaltate, $Li_2O_2$, lithium manganate, lithium nickelate, and lithium vanadate.

In some embodiments of the present application, the negative-electrode active material in the negative-electrode active material layer further includes one or more of hard carbon, soft carbon, mesocarbon microbeads, lithium titanate, carbon fiber, a silicon-based material, and a tin-based material.

In some embodiments of the present application, based on a total mass of the positive-electrode active material in the positive-electrode active material layer, the content of the $Li_{1+a}M_{1b}Fe_{1-c}A_cP_{1-d}E_dO_4$ is not less than 94 wt%.

In some embodiments of the present application, based on a total mass of the negative-electrode active material in the negative-electrode active material layer, the content of the graphite is not less than 85 wt%.

In some embodiments of the present application, the graphite satisfies at least one of the following conditions: an OI value of the graphite is 0.5-7, optionally 2-4.5; a BET specific surface area of the graphite is $0.8 \ m^2/g$-$1.5 \ m^2/g$; the graphitization degree of the graphite is 70%-99%, optionally 75%-98%; and a Dv50 particle size of the graphite is 1 $\mu$m-20 $\mu$m, optionally 4 $\mu$m-15 $\mu$m. Controlling graphite to satisfy the given conditions is beneficial to further improving the overall performance of lithium secondary battery and extending its service life.

In some embodiments of the present application, the graphite is artificial graphite.

In some embodiments of the present application, the thickness of the positive electrode plate is 130 $\mu$m-350 $\mu$m, and the thickness of the negative electrode plate is 100 $\mu$m-300 $\mu$m.

In some embodiments of the present application, $1.036 \le K_1 \le 1.308$. By controlling the value of $K_1$ within the given range, both the energy density and cost of the lithium secondary battery can be further taken into account on the basis of improving the service life of the lithium secondary battery.

In some embodiments of the present application, $1.149 \le K_2 \le 1.427$. By controlling the value of $K_2$ within the given range, both the energy density and cost of the lithium secondary battery can be further taken into account on the basis of improving the service life of the lithium secondary battery.

A second aspect of the present application provides an electrical apparatus, which includes the lithium secondary battery of the first aspect of the present application.

## DESCRIPTION OF DRAWINGS

The aforementioned and/or additional aspects and advantages of the present application will become apparent and easily understood from the description of the embodiments in conjunction with the following drawings, in which:

FIG. 1 is a schematic structural diagram of a positive electrode plate of a lithium secondary battery according to an embodiment of the present application.

FIG. 2 is a schematic structural diagram of a negative electrode plate of a lithium secondary battery according to an embodiment of the present application.

FIG. 3 is a schematic structural diagram of alternating distribution of positive electrode plates and negative electrode plates of a lithium secondary battery according to an embodiment of the present application.

FIG. 4 is a schematic structural diagram of an electrical apparatus according to an embodiment of the present application.

Reference numerals:

10 - positive electrode plate; 11 - positive-electrode current collector; 12 - positive-electrode active material layer; 20 - negative electrode plate; 21 - negative-electrode current collector; 22 - negative-electrode active material layer; 22a - negative-electrode active material layer on the side of the negative electrode plate facing the positive electrode plate; 22b - negative-electrode active material layer on the side of the negative electrode plate away from the positive electrode plate.

## DETAILED DESCRIPTION

The present application will be further described hereafter in connection with specific examples. It should be understood that these examples are only used for illustrating the present application, rather than limiting the scope of the present application.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

A "range" disclosed in the present application is defined in the form of a lower limit and/or an upper limit, with a given range being defined by the selection of a lower limit and/or an upper limit, and the selected lower and/or upper limits defining the boundaries of the particular range. A range defined in this manner may be inclusive or exclusive of end values, and may be arbitrarily combined, that is, any lower limit may be combined with any upper limit to form a range not explicitly recited; and any lower limit can be combined with another lower limit to form a range not explicitly recited, and likewise, any upper limit can be combined with any another upper limit to form a range not explicitly recited. Moreover, each separately disclosed point or single numerical value itself can be used as a lower or upper limit to form an unspecified range in combination with any other point or single numerical value or with other lower or upper limits. For example, if a range of no more than 150 is listed for a specific parameter, it will be understood it is also expected that 10-140 and 20-120, etc. satisfy the range of no more than 150. Additionally, if the minimum range values 2.1 and 3.5 are listed, and if the maximum range values 4.9 and 6.3 are listed, the following ranges are all contemplated: 2.1-6.3, 2.1-4.9, 3.5-6.3 and 3.5-4.9. **In** the present application, unless stated otherwise, a numerical range such as "10-50" represents an abbreviated representation of any combination of real numbers between 10 to 50, where both 10 and 50 are real numbers. For example, the numerical range "20-30" means that all real numbers between "20-30" have been listed herein, and "20-30" is just an abbreviated representation of the combination of these numerical values.

Unless otherwise specifically stated, all embodiments and optional embodiments of the present application may be combined with each other to form new technical solutions, and such technical solutions should be considered as being included in the disclosure of the present application.

Unless otherwise specifically stated, all technical features and optional technical features of the present application may be combined with each other to form new technical solutions, and such technical solutions should be considered as being included in the disclosure of the present application.

Unless otherwise specified, all steps of the present application may be performed sequentially or randomly, and preferably sequentially. For example, the method includes steps S1 and S2, meaning that the method may include steps S1 and S2 performed sequentially, or may include steps S2 and S1 performed sequentially. For example, the reference to the method may further include step S3, meaning that step S3 may be added to the method in any order. For example, the method may include steps S1, S2 and S3, or may further include steps S1, S3 and S2, or may further include steps S3, S1 and S2, and the like.

If not specifically stated, "including" and "comprising" mentioned in the present application indicate open inclusion or closed inclusion. For example, the "including" and "comprising" may indicate that it may further include or comprise other components not listed, and it may include or comprise only the listed components. Moreover, in the present application, the terms "plurality" and "multiple" refer to two or more.

Unless otherwise stated, in the present application, the term "and/or" is only an association relation describing associated objects, which means that there may be three relations. For example, A and/or B may represent three situations: A exists alone, both A and B exist, and B exists alone. In addition, the character "/" herein usually indicates an "or" relation between associated objects.

Unless otherwise defined, all technical and scientific terms used in the present application have the same meanings as those commonly understood by those skilled in the art belonging to the technical field of the present application. The terms used in the present application are only for the purpose of describing specific embodiments, but are not intended to limit the present application. The terms "comprising" and "having" and any variations thereof in the specification and the claims of the present application are intended to cover non-exclusive inclusions. Unless otherwise stated, the terms used in the present application have the well-known meanings commonly understood by those skilled in the art. Unless otherwise specified, the numerical values of the parameters mentioned in the present application can be measured using various measurement methods commonly used in the art (for example, they can be tested according to the methods given in the embodiments of the present application).

Currently, there are many implementations for allowing the lithium-ion battery to obtain a long life, but they mainly focus on the optimization of positive and negative electrode materials, electrolyte solutions, separator materials, etc. However, on the basis when the positive and negative electrode materials, the electrolyte solution, and the separator materials are all determined, it remains to be further studied how to further optimize the service life of the battery.

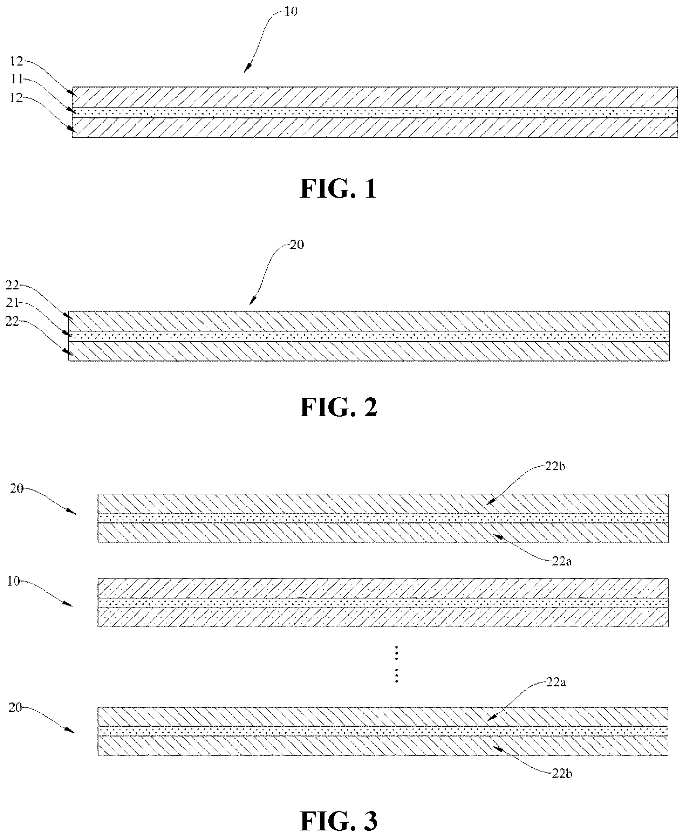

In view of this, a first aspect of the present application provides a lithium secondary battery. As understood with reference to FIGs. 1-3, the lithium secondary battery includes: a positive electrode plate 10 and a negative electrode plate 20. With reference to FIG. 1, the positive electrode plate 10 includes a positive-electrode current collector 11 and a positive-electrode active material layer 12 arranged on at least one side of the positive-electrode current collector 11. The positive-electrode active material layer 12 includes a positive-electrode active material $Li_{1+a}M_{1b}Fe_{1-c}A_cP_{1-d}E_dO_4$, wherein $-0.100 \leq a \leq 0.100$, $0 \leq b \leq 1.1$, $0 \leq c \leq 1$, $0 \leq d \leq 0.100$, $M_1$ includes one or more elements selected from Zn, Al, Na, K, Mg, Nb, Mo and W, A includes one or more elements selected from Mn, Zn, Al, Na, K, Mg, Mo, W, Ti, V, Zr, Ga, Sn, Sb, Nb and Ge, E includes one or more elements selected from B, Si, N, S, F, Cl and Br, and a mass ratio of the $Li_{1+a}M_{1b}Fe_{1-c}A_cP_{1-4}E_dO_4$ in the positive-electrode active material layer 12 is not less than 85 wt%. It is understood with reference to FIG. 2 that, the negative electrode plate 20 includes a negative-electrode current collector 21 and a negative-electrode active material layer 22 arranged on at least one side of the negative-electrode current collector 21. The negative-electrode active material layer 22 includes graphite, and a mass ratio of the graphite in the negative-electrode active material layer 22 is not less than 85 wt%. The positive-electrode active material layer 12 located on a single side of the positive electrode plate 10 has an areal density of CWc in $g/1540.25 \ mm^2$, and a reversible lithium capacity of Dc in $mAh/1540.25 \ mm^2$. It is understood with reference to FIG. 3, the negative-electrode active material layer 22a on the side of the negative electrode plate 20 facing the positive electrode plate 10 has a reversible lithium capacity of Da in $mAh/1540.25 \ mm^2$; the negative-electrode active material layer 22b on the side of the negative electrode plate 20 away from the positive electrode plate 10 has a first lithiation capacity of Ca in $mAh/1540.25 \ mm^2$; and the lithium secondary battery satisfies at least one of the equations 1 and 2, and the equations 1 and 2 are as shown below:

$$\text{equation 1: } 1.0337 + 0.37 \times \text{CWc} - 7.79 \times \rho \leq K_1 \leq 1.07 + 0.93 \times \text{CWc} - 2.9 \times \rho;$$

$$\text{equation 2: } 1.1485 + 0.43 \times \text{CWc} - 9.2 \times \rho \leq K_2 \leq 1.13 + 1.069 \times \text{CWc} - 1.7 \times \rho;$$

wherein $K_1 = \dfrac{Da}{Dc}$, $K_2 = \dfrac{Ca}{Dc}$, and $\rho$ is the conductivity of an electrolyte solution of the lithium secondary battery at 25°C, in S/cm.

Compared with the related art that optimizes battery materials, such as the positive and negative electrode active materials, the electrolyte solution, the separator materials, etc., the lithium secondary battery proposed in the first aspect of the present application achieves a beneficial effect of improving battery life on the basis of the same positive and negative electrodes, electrolyte solution, and separator materials by optimizing battery design parameters. Although the mechanism is not yet clear, the inventors have found during the exploration process that changes in battery design parameters such as the coating amount of the active material layers of the positive and negative electrode plates, the reversible lithium capacity, the first lithiation capacity and the conductivity of the electrolyte solution will affect the service life of the battery to a certain extent. For the battery system composed of the positive-electrode active material $Li_{1+a}M_{1b}Fe_{1-c}A_cP_{1-d}E_dO_4$ and graphite combined with graphite, when the aforementioned equations 1 and/or 2 are satisfied, the cycling performance of the battery can be further improved on the basis of the same positive and negative electrodes, electrolyte solution and separator materials, thereby extending the service life of the battery. As such, the lithium secondary battery of the first aspect of the present application has at least the following beneficial effects: (1) The utilization of the positive-electrode

active material $Li_{1+a}M_{1b}Fe_{1-c}A_cP_{1-d}E_dO_4$ is conducive to improving the cycle life of the battery. (2) Satisfying at least one of the aforementioned equations 1 and 2 can further improve the cycling performance of the battery on the basis of the same positive and negative electrodes, electrolyte solution, and separator materials, extend the service life of the battery, and make the life of the battery cell reach a better level. It should be noted that the overall change trends of $K_1$ and $K_2$ are the same, and they generally increase or decrease at the same time. The main reason is that $K_1$ and $K_2$ have the same denominator. The relative change trend of the two is mainly determined by the first lithiation capacity and reversible lithiation capacity of the negative-electrode active material layer. The first effect of the negative-electrode active material layer = reversible lithiation capacity/first lithiation capacity. The negative-electrode active material layers on both sides of the negative electrode plate are the same. When the composition of the negative-electrode active material layer is determined, the first effects of the negative-electrode active material layers on both sides of the same negative electrode plate are the same, so that the reversible lithium capacity Da of the negative-electrode active material layer on the side of the negative electrode plate facing the positive electrode plate and the first lithiation capacity Ca of the negative-electrode active material layer on the side away from the positive electrode plate have the same change trend. When the battery design parameters are consistent, the magnitudes of the absolute values of K1 and K2 will change, but the rule of positive correlation between the two will not change. Satisfying one of equations 1 and 2 can improve the cycling performance of the battery. (3) It provides new ideas and directions for the research of long-life batteries. It should be noted that "the side of the negative electrode plate away from the positive electrode plate" refers to the side of the negative electrode plate that is not opposite to the positive electrode plate.

Moreover, it should be noted that in the equation 1 and the equation 2, only numerical values are substituted during calculation without units. For example, taking the areal density of the positive-electrode active material layer located on a single side of the positive electrode plate being 0.3 g/1540.25 mm$^2$ and the conductivity of the electrolyte solution at 25°C being 0.014 S/cm as an example, when the value ranges of $K_1$ and $K_2$ are calculated utilizing equations 1 and 2, CWc = 0.3, and $\rho$ = 0.014. That is, the value range of $K_1$ calculated by equation 1 and the value range of $K_2$ calculated by equation 2 are respectively:

$$1.0337 + 0.37 \times 0.3 - 7.79 \times 0.014 \leq K_1 \leq 1.07 + 0.93 \times 0.3 - 2.9 \times 0.014;$$

$$1.1485 + 0.43 \times 0.3 - 9.2 \times 0.014 \leq K_2 \leq 1.13 + 1.069 \times 0.3 - 1.7 \times 0.014.$$

According to the embodiments of the present application, the structure of a lithium secondary battery generally includes N (which is a positive integer) positive electrode plates and N+1 negative electrode plates (with a separator being arranged between the positive electrode plates and the negative electrode plates) that are alternately stacked. Each surface of the positive electrode plate has a negative electrode plate adjacent to it (arranged oppositely), which is beneficial to fully utilizing the positive-electrode active material in the positive electrode plate, thereby facilitating the improvement of the capacity and energy density of the lithium secondary battery. ICP testing can be utilized to obtain the content of each element in the positive and negative electrode plates. The areal density or capacity of the capacity of the positive/negative electrode plate can be tested referring to the following method: after fully discharged at a nominal rate within a voltage range as used, the lithium secondary battery is disassembled in a glove box filled with nitrogen, and the disassembled electrode plates are washed with DMC for three times to obtain positive electrode plates and negative electrode plates; wherein

When the areal density of the positive-electrode active material layer on a single side of the positive electrode plate is tested, the positive-electrode active material layer on a single side of the positive electrode plate can be peeled off and weighed (with an accuracy that can be 0.0001 g), and the areal density of the positive-electrode active material layer can be obtained by conversion in connection with a sample size.

When the capacity of the positive/negative electrode plates is tested, a button-type half battery can be composed of the positive electrode plates and negative electrode plates obtained by the disassembly method and a lithium metal sheet for measurement. Taking the negative electrode plate as an example, a method for testing the capacity of the negative electrode plate is that: the disassembled negative electrode plate is washed with DMC (dimethyl carbonate) for three times to obtain negative electrode plates (including the surfaces of the negative electrode plates facing the positive electrode plates and the surfaces of the negative electrode plates away from the positive electrode plates), the negative electrode plates are respectively combined with a lithium metal sheet to form a button-type half battery, and the half battery is charged with a current of 0.1 C and a voltage range of 0.005 V-2.0 V to test the reversible capacity of the negative electrode plate and the first lithiation capacity of the negative electrode plate that has not been subjected to lithium intercalation, and then the reversible capacity (the reversible capacity Da per unit area on the surface at the side of the negative electrode plate facing the positive electrode plate) and the first lithiation capacity (the first lithiation capacity Ca per unit area on the surface at the side of the negative electrode plate away from the positive electrode plate ) corresponding to the negative electrode plate are converted proportionally by area. It is understood with reference to FIG. 3 that, when the reversible capacity of the negative electrode plate is tested, the surface 22a of the negative electrode plate 20 facing the positive electrode plate 10 is in contact with the separator; when the first lithiation capacity of the negative electrode plate that has not been subjected to lithium intercalation is tested, a middle position of the negative electrode plate is taken (because during the charge and discharge process, the side of the negative electrode plate away from the positive electrode plate usually does not participate in the reaction, that is, lithium intercalation does not occur, but the edge of the side of the negative electrode plate away from the positive electrode plate may be subjected to lithium intercalation, but the probability is very small, so the edge area is avoided during sampling), and the surface 22b of the negative electrode plate 20 away from the positive electrode plate 10 is in contact with the separator. It should be noted that assembling of the battery is conducted in a glove box filled with nitrogen.

Further, after in-depth research, the inventors have also found that for the lithium secondary battery of the present application, on the basis of satisfying the aforementioned conditions, the composition and areal density of the positive-electrode active material, the conductivity and viscosity of the electrolyte solution, the usage amount of the positive-electrode active material and the negative-electrode active material, the characteristic parameters of graphite, etc. can be further controlled to further improve the performance of the lithium secondary battery. That is, on the basis of satisfying the aforementioned conditions, one or more of the following conditions may also be optionally satisfied.

In some embodiments of the present application, in the positive-electrode active material $Li_{1+a}M_{1b}Fe_{1-c}A_cP_{1-d}E_dO_4$, $M_1$ can be a lithium-site doped element, such as one or more elements selected from Zn, Al, Na, K, Mg, Nb, Mo and W; A can be an iron-site doped element, for example, it can be one or more elements selected from Mn, Zn, Al, Na, K, Mg, Mo, W, Ti, V, Zr, Ga, Sn, Sb, Nb and Ge, and also for example, it can be one or more elements selected from Mn, Ti, V and Mg; and E can be a phosphorus-site doped element, for example, it can be one or more elements selected from B, Si, N, S, F, Cl and Br, and also for example, it can be one or more elements selected from B, Si, N and S. Doping at at least one of the lithium, iron and phosphorus sites is beneficial to assisting in improving the performance of the positive-electrode active material. For example, it can improve the interface performance, reduce the interfacial side reactions with the electrolyte solution, reduce the antisite defect concentration, improve the kinetics and gram capacity of materials, etc. At the same time, by regulating the elements doped at the iron site, it is also beneficial to improving the particle morphology and increasing the compacted density. If the value of a is too small, the lithium content of the entire core system will be reduced, affecting the gram capacity of the material. The c value will limit the total amount of all doping elements, affecting the iron content in the system, and meanwhile may also affect the voltage plateau of the positive-electrode active material. The E element is doped in the phosphorus position, and since the P-O tetrahedron is relatively stable, a too large d value may affect the stability of the material. When a, c and d satisfy the given range of $-0.100 \leq a \leq 0.100$ (for example it may be -0.1, -0.08, -0.05, - 0.02, 0, 0.02, 0.05, 0.08, 0.1, etc., or may be a range consisting of any of the aforementioned numerical values), $0 \leq c \leq 1$ (for example it may be 0, 0.1, 0.2, 0.3, 0.4, 0.5, 0.6, 0.7, 0.8, 0.9, 1, etc., or may be a range consisting of any of the aforementioned numerical values), $0 \leq d \leq 0.100$ (for example it may be 0, 0.02, 0.05, 0.08, 0.1, etc., or may be a range consisting of any of the aforementioned numerical values), the positive-electrode active material can have better performance. Moreover, the selection of the aforementioned doping elements and the values of a, b, c, and d can also enable $Li_{1+a}M_{1b}Fe_{1-c}A_cP_{1-d}E_dO_4$ to be maintained electrically neutral, and maintaining electrical neutrality can ensure that the defects and impurities in the positive-electrode active material are as few as possible. In the embodiments of the present application, the relative molar amount of each element (such as an element A and an element Fe) in the positive-electrode active material layer can be obtained through calculation after the mass of the positive-electrode active material layer and the mass of each element in the positive-electrode active material layer are determined, wherein the mass of the positive-electrode active material layer can be obtained by the disassembly and weighing (accurate to 0.0001 g) as described in the preceding section, and the masses of the element A and the element Fe in the positive-electrode active material layer can be obtained in connection with ICP testing. Moreover, it can be understood that in the "iron site" doping described in the present application, the iron site only represents the position of the iron element or the element A in a lattice of the positive-electrode active material $Li_{1+a}M_{1b}Fe_{1-c}A_cP_{1-d}E_dO_4$, but does not mean that there must be an iron element in the iron site. The iron element on the iron site can be partially or completely replaced by the element A. For example, when the c value is 1, the second positive-electrode active material $Li_{1+a}M_{1b}Fe_{1-c}A_cP_{1-d}E_dO_4$ does not contain the iron element. For example, at this time, the iron site may include a manganese element or include a manganese element and other doping elements at the same time.

Unless otherwise specified, in the present application for the aforementioned positive-electrode active material $Li_{1+a}M_{1b}Fe_{1-c}A_cP_{1-d}E_dO_4$, when a doping site has more than two elements, the definition of the numerical range of the stoichiometric numbers of the corresponding doping site elements in the chemical formula is not only the definition of the stoichiometric number of each element as the site, but also the definition of the sum of the stoichiometry of each element as the site. For example, when A is two or more elements $A_1, A_2 ... A_n$, the respective stoichiometric numbers $c_1, c_2...c_n$ of the $A_1, A_2...A_n$ must each fall within the numerical range for c defined in the present application, and the sum of $c_1, c_2, ..c_n$ must also fall within the numerical range. Similarly, for the case where $M_1$ or E is two or more elements, the definition of the numerical ranges of the stoichiometric numbers of $M_1$ and E in the present application also has the aforementioned meaning.

In some embodiments of the present application, the positive-electrode active material $Li_{1+a}M_{1b}Fe_{1-c}A_cP_{1-d}E_dO_4$ may include one or more of the positive-electrode active materials of a lithium iron phosphate system, a lithium manganese phosphate system, a lithium manganese iron phosphate system, etc. that satisfy the aforementioned general formula $Li_{1+a}M_{1b}Fe_{1-c}A_cP_{1-d}E_dO_4$. For example, the positive-electrode active material $Li_{1+a}M_{1b}Fe_{1-c}A_cP_{1-d}E_dO_4$ may include at least one of the positive-electrode active materials corresponding to the following three conditions: (1) c = 0, at this time the general formula of the corresponding positive-electrode active material is $Li_{1+a}M_{1b}FeP_{1-d}E_dO_4$, for example including but not limited to $LiFePO_4$; (2) c = 1, A is Mn element, and at this time the general formula of the corresponding positive-electrode active material is $Li_{1+a}M_{1b}MnP_{1-d}E_dO_4$, for example including but not limited to $LiMnPO_4$; (3) 0 < c < 1, A is the Mn element, and the general formula of the corresponding positive-electrode active material is $Li_{1+a}M_{1b}Fe_{1-c}Mn_cP_{1-d}E_dO_4$, for example including but not limited to $LiMn_{0.5}Fe_{0.5}PO_4$, $LiMn_{0.3}Fe_{0.7}PO_4$, $LiMn_{0.5}Fe_{0.5}PO_4$, etc. It should be noted that, in the positive-electrode active materials $Li_{1+a}M_{1b}FeP_{1-d}E_dO_4$, $Li_{1+a}Mi_{1b}MnP_{1-d}E_dO_4$ and $Li_{1+a}M_{1b}Fe_{1-c}Mn_cP_{1-d}E_dO_4$ involved in the aforementioned three conditions, the stoichiometric numbers of the elements located at the same site may be the same or different, but they all satisfy the numerical range specified for the stoichiometric number of each element in the chemical formula $Li_{1+a}M_{1b}Fe_{1-c}A_cP_{1-d}E_dO_4$.

In some embodiments of the present application, the positive-electrode active material $Li_{1+a}M_{1b}Fe_{1-c}A_cP_{1-d}E_dO_4$ may include $LiFe_{1-c}Mn_cPO_4$, wherein $0 \leq c \leq 1$, wherein $LiFe_{1-c}Mn_cPO_4$ may further include one or more of $LiFePO_4$, $LiMnPO_4$ and $LiFePO_4$ doped with manganese at the iron site (i.e., in the case where 0 < c < 1 in $LiFe_{1-c}Mn_cPO_4$).

In some embodiments of the present application, $0.25 \leq CWc \leq 0.6$ (i.e., the areal density of the positive-electrode active material layer 12 located on a single side of the positive electrode plate may be 0.25 g/1540.25 mm$^2$-0.6 g/1540.25 mm$^2$). For example, the value of CWc may be 0.25, 0.3, 0.35, 0.4, 0.45, 0.5, 0.55 or 0.6, etc., or may be a range consisting of any of the aforementioned numerical values. When the CWc value is too small, it is not conducive to improving the improvement effect on the cycle lithium consumption of the lithium secondary battery that satisfies the design rules of the embodiments of the present application and the energy density of the lithium secondary battery, and it is easy to increase the cost of the lithium secondary battery. Increasing the areal density of the positive-electrode active material layer is beneficial to improving this problem, but when the CWc value is too large, on one hand, it is easy to increase the battery polarization, resulting in a worse cycle life, and on the other hand, it will also increase the cost of raw materials, and fail to achieve the cost benefit of improving the life. On the basis of satisfying the aforementioned equations 1 and/or 2, controlling the areal density CWc of the positive-electrode active material layer on a single side of the positive electrode plate to satisfy the given range is beneficial to significantly improving the cycle lithium consumption and energy density of the lithium secondary battery, and taking into account the battery cost while improving the battery life. Optionally, $0.26 \leq CWc \leq 0.5$, and controlling CWc to satisfy the given range can further improve the life of the lithium secondary battery while taking the battery cost into consideration.

In some embodiments of the present application, a value range of the conductivity $\rho$ of the electrolyte solution of the lithium secondary battery at 25°C is 0.008 S/cm-0.020 S/cm, for example, it can be 0.008 S/cm, 0.01 S/cm, 0.012 S/cm, 0.014 S/cm, 0.016 S/cm, 0.018 S/cm or 0.02 S/cm, etc., or it can be a range composed of any of the aforementioned numerical values. The conductivity test of the electrolyte solution is carried out under conditions of a constant temperature of 25°C. For details, please refer to: HG/T4067-2015 lithium hexafluorophosphate electrolyte solution, 5.8 Determination of conductivity. An electrolyte solution with high conductivity can improve the battery kinetics level and enhance the overall performance of the lithium secondary battery. On the basis of satisfying the equations 1 and/or 2, by controlling the conductivity of the electrolyte solution within the given range, it is beneficial to improving the kinetics of the lithium secondary battery to obtain a further improved service life. Optionally, a value range of the conductivity $\rho$ of the electrolyte solution at 25°C can be 0.009 S/cm-0.016 S/cm, thereby further improving the service life of the lithium secondary battery.

In some embodiments of the present application, the viscosity of the electrolyte solution of the lithium secondary battery at 25°C may be 1.5 mPa·s-5 mPa·s. For example, it may be 1.5 mPa·s, 2 mPa·s, 2.5 mPa·s, 3 mPa·s, 3.5 mPa·s, 4 mPa·s, 4.5 mPa·s or 5 mPa·s, etc., or may be a range consisting of any of the aforementioned numerical values. The viscosity test of the electrolyte solution is carried out at 25°C. For details, please refer to: GB/T10247-2008 "Viscosity Measurement Method" Rotation Method. Controlling the viscosity of the electrolyte solution within a given range is not only beneficial to obtaining a higher ion migration rate, but also beneficial to allowing the positive electrode plate and the negative electrode plate to be infiltrated by the electrolyte solution in a shorter time, thereby facilitating improvement of the overall performance of the lithium secondary battery. Optionally, the viscosity of the electrolyte solution may be 2 mPa·s-4 mPa·s.

In some embodiments of the present application, it is understood with reference to FIG. 3 that, the areal density of the negative-electrode active material layer 22a on the side of the negative electrode plate 20 facing the positive electrode plate 10 is CWa in g/1540.25 mm$^2$, wherein the ratio of the areal density CWc of the positive-electrode active material layer on a single side of the positive electrode plate 10 to the areal density CWa of the negative-electrode active material layer 22a on the side facing the positive electrode plate 10 may satisfy the following relationship: $1.6 \leq \dfrac{CWc}{CWa} \leq 6$, and for example, the ratio of $\dfrac{CWc}{CWa}$ may be 1.6, 2, 2.5, 3, 3.5, 4, 4.5, 5, 5.5 or 6, etc., or may be a range consisting of any of the aforementioned numerical values. A test of the areal density of the negative-electrode active material layer on the side of the negative electrode plate facing the positive electrode plate can be carried out by referring to the method for testing the areal density of a single positive-electrode active material layer in the aforementioned section. CWa and CWc reflect, to a certain extent, the reversible lithiation capacities per unit weight in the active material layers of the negative electrode plate and the positive electrode plate. A decrease in CWc or an increase in CWa will result in decrease in the ratio of $\dfrac{CWc}{CWa}$, and a decrease in the ratio of $\dfrac{CWc}{CWa}$ will cause a decrease in the energy density of the lithium secondary battery. By controlling the ratio of $\dfrac{CWc}{CWa}$ within the given range, it is beneficial to better matching the reversible lithiation capacities of the positive and negative electrode plates and obtaining an improved cycle life. It can also further take into account the energy density and cost of the lithium secondary battery, and further optimize the energy density and cost on the basis of improving the service life of the lithium secondary battery. Optionally, the ratio of $\dfrac{CWc}{CWa}$ may further satisfy $1.8 \leq \dfrac{CWc}{CWa} \leq 3$, and satisfying this condition is beneficial to further taking into account the long service life, high energy density and low cost of the lithium secondary battery.

In some embodiments of the present application, in the positive electrode plate, the positive-electrode active material $Li_{1+a}M_{1b}Fe_{1-c}A_cP_{1-d}E_dO_4$ can be used alone to form the positive-electrode active material layer, or the $Li_{1+a}M_{1b}Fe_{1-c}A_cP_{1-d}E_dO_4$ can be admixed with other positive-electrode active materials to form the positive-electrode active material layer. For example, in addition to the $Li_{1+a}M_{1b}Fe_{1-c}A_cP_{1-d}E_dO_4$, the positive-electrode active material used in the positive-electrode active material layer may also include one or more of a ternary nickel-cobalt-manganese material, lithium cobalt oxide, $Li_2O_2$, lithium manganate (e.g. lithium-rich lithium nickelate), lithium nickelate, and lithium vanadate. Admixing the $Li_{1+a}M_{1b}Fe_{1-c}A_cP_{1-d}E_dO_4$ with other positive-electrode active materials is beneficial to further improving the performance of the lithium secondary battery. As a specific example, the ternary nickel-cobalt-manganese material can be admixed with the $Li_{1+a}M_{1b}Fe_{1-c}A_cP_{1-d}E_dO_4$. By adopting this manner, it can further take into account the specific capacity of the positive-electrode active material layer and the stability of it during the charge and discharge process, thereby improving the energy density and service life of the lithium secondary battery.

In some embodiments of the present application, based on the total mass of the positive-electrode active material in the positive-electrode active material layer, the content of $Li_{1+a}M_{1b}Fe_{1-c}A_cP_{1-d}E_dO_4$ may be not less than 94 wt%, and for example, it may be 94 wt%, 95 wt%, 96 wt%, 97 wt%, 98 wt%, 99 wt% or 100 wt%, etc., or it may be a range consisting of any of the aforementioned numerical values. By controlling the mass ratio of the $Li_{1+a}M_{1b}Fe_{1-c}A_cP_{1-d}E_dO_4$ in the positive-electrode active material layer to satisfy the given range, the cycle life of the lithium secondary battery can be further improved and its service life can be extended.

In some embodiments of the present application, in the negative electrode plate, the negative-electrode active material graphite can be used alone to form the negative-electrode active material layer, or the graphite can be admixed with other negative-electrode active materials to form the negative-electrode active material layer. For example, in addition to the graphite, the negative-electrode active material in the negative-electrode active material layer may further include one or more of hard carbon, soft carbon, mesocarbon microbeads, lithium titanate, carbon fiber, a silicon-based material, and a tin-based material. Admixing graphite with other negative-electrode active materials is beneficial to achieving purposes of improving the lithiation capacity, rate performance, raw material cost, etc. of the negative electrode plate according to actual needs. As a specific example, graphite can be admixed with a silicon-based material to form a negative-electrode active material layer. Adopting this manner can further increase the lithiation capacity of the negative-electrode active material layer and improve the energy density of the lithium secondary battery.

In some embodiments of the present application, based on the total mass of the negative-electrode active material in the negative-electrode active material layer, the content of graphite may be not less than 85 wt%, and for example, it may be 85 wt%, 88 wt%, 90 wt%, 92 wt%, 95 wt%, 98 wt% or 100 wt%, etc., or it may be a range consisting of any of the aforementioned numerical values. The graphite has a relatively stable structure, and its volume change is relatively small during the process of lithium-ion intercalation and deintercalation. By controlling the mass ratio of the graphite in the negative-electrode active material layer to satisfy the given range, it is beneficial to further improving the stability of the negative electrode plate and improving the cycle life of the lithium secondary battery.

In some embodiments of the present application, the graphite in the negative-electrode active material layer may be artificial graphite. Compared with natural graphite, the artificial graphite has better cycle stability and fewer side reactions with the electrolyte solution, which is more conducive to improving the cycle life of the lithium secondary battery.

In some embodiments of the present application, the OI value of the graphite may be 0.5-7 (Orientation Index), and for example, it may be 0.5, 1, 2, 3, 4, 5, 6 or 7, or a range consisting of any of the aforementioned numerical values. The OI value of the graphite can be obtained by referring to JIS/K0131-1996 General Rules for X-ray Diffraction Analysis. The C004 and C110 peak positions are scanned at a low speed respectively, and the OI value is calculated by the equation $OI = I(C004)/I(C110)$. I(C004) refers to the peak intensity of the peak C004, and I(C110) refers to the peak intensity of the peak C110. Controlling the OI value of graphite within a given range can enable the negative-electrode active material to have better electrolyte-solution wettability, better conductivity and good stability, thereby facilitating improving the overall performance of the lithium secondary battery. Optionally, the OI value of graphite may be 2-4.5. Controlling the OI value of graphite within the given range can further improve the overall performance of the lithium secondary battery.

In some embodiments of the present application, the BET specific surface area of the graphite may be 0.8 $m^2/g$-1.5 $m^2/g$, and for example, it may be 0.8 $m^2/g$, 1.0 $m^2/g$, 1.2 $m^2/g$, 1.5 $m^2/g$, etc., or may be any range consisting of any of the aforementioned numerical values. The specific surface area of the graphite can be determined by a conventional method in the art, such as a nitrogen physical adsorption method. Increasing the specific surface area is conducive to increase the active sites of the graphite and improve power performance, but these increased active sites will also increase the side reactions of graphite during the charge and discharge cycle, thereby causing the cycling performance to decay. By controlling the specific surface area of the graphite within a given range, the capacity and cycling performance of the lithium secondary battery can be further improved and the service life can be extended.

In some embodiments of the present application, the degree of graphitization of graphite may be 70%-99%, and for example, it may be 70%, 74%, 80%, 85%, 90%, 96%, 99%, etc., or may be a range consisting of any of the aforementioned numerical values. The graphitization degree of the graphite can be determined by X-ray diffraction or laser Raman spectroscopy. For example, the graphitization degree of the graphite can be tested according to JIS/K0131-1996 General Rules for X-ray Diffraction Analysis, and the crystal unit cell parameters are calculated by X-ray polycrystalline diffraction. The peak positions of C004 and Si311 of 2 duplicate samples are acquired by finding a peak with a the center of gravity method, and are substituted into an equation of crystal plane spacing to calculate a value of a graphite layer spacing d002. The obtained d002 is substituted into a Mering-Maire equation (also known as Franklin equation): $g = [(3.440\text{-}d002)/(3.440\text{-}3.354)] \times 100\%$, so as to obtain the value of graphitization degree g. Controlling the graphitization degree of graphite within a given range can further improve the conductivity of the negative-electrode active material layer, facilitate the diffusion of lithium ions, and improve the overall performance of the lithium secondary battery. Optionally, the graphitization degree of the graphite may be 75%-98%. Controlling the graphitization degree of the graphite within the given range is beneficial to further improving the overall performance of the lithium secondary battery.

In some embodiments of the present application, the Dv50 particle size of the graphite may be 1 $\mu$m-20 $\mu$m, and for example, it may be 1 $\mu$m, 3 $\mu$m, 5 $\mu$m, 7 $\mu$m, 10 $\mu$m, 12 $\mu$m, 15 $\mu$m, 12 $\mu$m, 15 $\mu$m, 18 $\mu$m or 20 $\mu$m, etc., or it may be a range consisting of any of the aforementioned numerical values. The Dv50 particle size of the graphite refers to a corresponding particle size when the cumulative volume distribution percentage of the graphite reaches 50%, which can be determined by laser diffraction particle size analysis. For example, it can be determined by using a laser particle size analyzer (e.g. Malvern Master Size 3000) with reference to the standard GB/T 19077-2016. Smaller graphite particle size is beneficial to improving the rate performance and cycling performance of the negative electrode, but the first efficiency is poor. By controlling the particle size of the graphite within a given range, it is beneficial to enabling the lithium secondary battery to have both better rate performance and cycling performance, as well as higher initial discharge capacity and first efficiency. Optionally, the Dv50 particle size of the graphite may be 4 $\mu$m-15 $\mu$m. Controlling the particle size of the graphite within the given range is beneficial to further improving the overall performance of the lithium secondary battery.

In some embodiments of the present application, the thickness of the positive electrode plate 10 may be 130 $\mu$m-350 $\mu$m, and for example, it may be 130 $\mu$m, 150 $\mu$m, 180 $\mu$m, 200 $\mu$m, 220 $\mu$m, 250 $\mu$m, 280 $\mu$m, 300 $\mu$m, 320 $\mu$m, 350 $\mu$m, etc., or may be a range consisting of any of the aforementioned numerical values. The thickness of the negative electrode plate 20 may be 100 $\mu$m-300 $\mu$m, and for example, it may be 120 $\mu$m, 150 $\mu$m, 180 $\mu$m, 200 $\mu$m, 220 $\mu$m, 250 $\mu$m, 280 $\mu$m, 300 $\mu$m, etc., or may be any range consisting of any of the aforementioned numerical values. The thickness of the positive electrode plate and the negative electrode plate can be measured respectively by a tenthousandth micrometer. Specifically, the thickness of the electrode plate can be measured at multiple points, and the average value of the thickness of the electrode plate can be obtained by statistics. In the present application, by controlling the thickness of the positive electrode plate and the negative electrode plate within the given range, it is beneficial to obtaining a higher energy density while taking into account better rate performance.

In some embodiments of the present application, it is understood with reference to FIG. 1 that, the reversible lithium capacity of the positive-electrode active material layer 12 located on a single side of the positive electrode plate 10 is Dc in mAh/1540.25 $mm^2$; it is understood with reference to FIG. 3 that, the reversible lithium capacity of the negative-electrode active material layer 22a on the side of the negative electrode plate 20 facing the positive electrode plate 10 is Da in mAh/1540.25 mm²; wherein $K_1 = \dfrac{Da}{Dc}$ , the value range of $K_1$ may satisfy: $1.036 \leq K_1 \leq 1.308$, and for example, the value of $K_1$ may be 1.05, 1.08, 1.1, 1.12, 1.15, 1.18, 1.2, 1.22, 1.25, 1.28, 1.3, etc., or may be a range consisting of any of the aforementioned numerical values. For the lithium secondary battery of the embodiments of the present application, it is necessary to consider the mutual matching of the reversible lithiation capacities of the positive and negative electrode plates and improve the utilization rate of the positive-electrode active material, while also taking into account the cycle life, energy density and cost of the lithium secondary battery. Increasing the value of $K_1$ is beneficial to improving the cycle life of the battery and extending the service life. However, when the value of $K_1$ is too large, although it will also increase the life of the lithium secondary battery, the increase amplitude in its life is small, which will on the contrary increase the cost significantly. By controlling the value of $K_1$ within the given range, both the energy density and cost of the lithium secondary battery can be further taken into account on the basis of improving the service life of the lithium secondary battery.

In some embodiments of the present application, it is understood with reference to FIG. 1 that, the reversible lithium capacity of the positive-electrode active material layer 12 located on a single side of the positive electrode plate 10 is Dc in mAh/1540.25 mm²; it is understood with reference to FIG. 3 that, the first lithiation capacity of the negative-electrode active material layer 22b on the side of the negative electrode plate 20 away from the positive electrode plate 10 is Ca in mAh/1540.25 mm²; wherein $K_2 = \dfrac{Ca}{Dc}$ , the value range of $K_2$ may satisfy: $1.149 \leq K_2 \leq 1.427$, and for example, the value of $K_2$ may be 1.15, 1.18, 1.2, 1.22, 1.25, 1.28, 1.3, 1.32, 1.35, 1.38, 1.4, or 1.42 etc., or may be a range consisting of any of the aforementioned numerical values. During the charge and discharge process, the surface of the negative electrode plate away from the positive electrode plate does not participate in the reaction, and the surface of the negative electrode plate away from the positive electrode plate is not subjected to lithium intercalation. By making the value of $K_2$ satisfy the given range, the matching relationship between the reversible lithium capacity of the negative-electrode active material layer on the side of the negative electrode plate facing the positive electrode plate and the reversible lithium capacity of the positive-electrode active material layer on a single side of the positive electrode plate can be further improved, and the energy density and cost can be further taken into account on the basis of improving the service life of the lithium secondary battery.

In some embodiments of the present application, the lithium secondary battery may be either a laminated battery or a wound battery, and the wound battery may be either a square battery or a cylindrical battery. Depending on the type of battery, the positive electrode plate, the negative electrode plate and the separator can be stacked to form a laminated unit, or can be stacked and then wound to form a wound body.

In some embodiments of the present application, the battery may be a single battery cell, or may be a battery module assembled from battery cells, and the number of battery cells included in the battery module can be multiple, and the specific number can be adjusted according to the application and capacity of the battery module. Further, the battery module may further include a packaging assembly having an accommodating space, and the packaging assembly may include a bottom plate, a side plate, a cover plate, and the like.

In some embodiments of the present application, the aforementioned battery modules can further be assembled into a battery pack, and the number of battery modules contained in the battery pack can be adjusted according to the application and capacity of the battery pack.

Additionally, the present application further provides an electrical apparatus, which includes the lithium secondary battery of the first aspect of the present application.

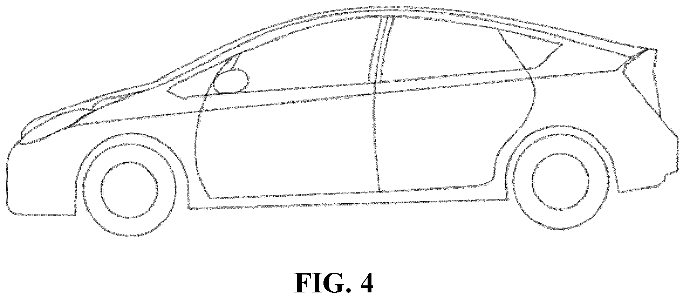

The lithium secondary battery, such as a battery cell, a battery module, or a battery pack, can be used as a power source for the electrical apparatus, and can also be used as an energy storage unit for the electrical apparatus. The electrical apparatus may include, but is not limited to, a mobile device (e.g. a mobile phone, a laptop), an electric vehicle (e.g. an all-electric vehicle, a hybrid electric vehicle, a plug-in hybrid electric vehicle, an electric bicycle, an electric scooter, an electric golf cart, an electric truck), an electric train, a ship, a satellite, and an energy storage system. As a specific example, as shown in FIG. 4, the electrical apparatus may be a vehicle.

For the electrical apparatus, the specific type of the battery can be selected according to the usage requirements of the electrical apparatus, such as a battery cell, a battery module or a battery pack.

As an example, the electrical apparatus may be an all-electric vehicle, a hybrid electric vehicle, or a plug-in hybrid electric vehicle. In order to satisfy the requirements of the electrical apparatus for high power and high energy density of the battery, the battery pack or battery module can be employed.

As another example, the electrical apparatus may be a mobile phone, a tablet, a laptop. Lighting and thinning of the electrical apparatus is generally required, and thus the battery cell can be employed as the power source.

Examples of the present application will be described hereinafter. The embodiments described below are exemplary and only used to explain the present application, and are not to be construed as limiting the present application. Where specific techniques or conditions are not specified in the examples, the techniques or conditions described in the literature of the art or the product specifications are followed. All of the used agents or instruments which are not specified with the manufacturer are conventional commercially-available products.

**Preparation and testing methods of lithium secondary battery:**

(1) Preparation of positive electrode plate

A positive-electrode active material $LiFePO_4$ (with a gram capacity of 160 mAh/g), a conductive agent of acetylene black and a binder of polyvinylidene fluoride (PVDF) were mixed according to a weight ratio of 94:4:2, added with a solvent of N-methyl pyrrolidone, and mixed under sufficient stirring to obtain a positive electrode slurry. Thereafter, the positive electrode slurry was coated onto two surfaces of a aluminum foil as a positive electrode current collector with the coating weight of the positive electrode slurry on a single side of the aluminum foil being 0.256 g/1540.25 mm$^2$ (by weight excluding the solvent), and then subjected to oven drying and cold pressing to obtain a positive electrode plate.

(2) Preparation of negative electrode plate

A negative-electrode active material of artificial graphite (with a first lithiation gram capacity of 370 mAh/g, and a reversible lithiation gram capacity of 333 mAh/g), a conductive agent of acetylene black, a binder of styrene-butadiene rubber (SBR) plus sodium carboxymethylcellulose (CMC) were mixed according to a weight ratio of 95:1.5:3.1:0.4, added with a solvent of deionized water, and mixed under sufficient stirring to obtain a negative electrode slurry. Thereafter, the negative electrode slurry was coated onto two surfaces of a copper foil as a negative electrode current collector with the coating weight of the negative electrode slurry on a single side of the copper foil being 0.1370 g/1540.25 mm$^2$ (by weight excluding the solvent), and then subjected to oven drying and cold pressing to obtain a negative electrode plate.

(3) preparation of electrolyte solution

In an argon-atmosphere glove box with a water content of < 10 ppm, EC (ethylene carbonate), PC (propylene carbonate), and DMC (dimethyl carbonate) were mixed in a specific proportion, and then a fully dried lithium salt of $LiPF_6$ was dissolved in the aforementioned mixed organic solvent, and stirred evenly to obtain an electrolyte solution with a conductivity of 0.014 S/cm, in which the concentration of $LiPF_6$ is 1 mol/L.

(4) Preparation of separator

A polyethylene porous film was used as the separator.

(5) Preparation of lithium secondary battery

The positive electrode plate, the separator and the negative electrode plate were stacked in sequence, so that the separator was placed between the positive electrode plate and the negative electrode plate to play a role of isolation, and then they were wound to obtain a bare battery cell. The bare battery cell was placed in an outer package, injected with the formulated electrolyte solution and encapsulated to obtain the lithium-ion lithium secondary battery.

Under this design:

The areal density CWc of the positive-electrode active material layer located on a single side of the positive electrode plate was 0.256 g/1540.25 mm$^2$;

the reversible lithium capacity Dc (mAh/1540.25 mm$^2$) of the positive-electrode active material layer located on a single side of the positive electrode plate = the areal density of the positive-electrode active material layer located on a single side of the positive electrode plate × the mass ratio of the positive-electrode active material in the positive-electrode active material layer × the gram capacity of the positive-electrode active material, that was, Dc = 0.256 g/1540.25 mm$^2$ × 0.94 × 160 mAh/g;
the areal density CWa of the negative-electrode active material layer on the side of the negative electrode plate away from the positive electrode plate was 0.1370 g/1540.25 mm$^2$;
the first lithiation capacity of the negative-electrode active material layer on the side of the negative electrode plate away from the positive electrode plate was Ca (mAh/1540.25 mm$^2$) = CWa × 0.95 × 370 mAh/g;
the reversible lithiation capacity of the negative-electrode active material layer on the side of the negative electrode plate facing the positive electrode plate was Da (mAh/1540.25 mm$^2$) = CWa × 0.95 × 333 mAh/g;

the conductivity $\rho$ of the electrolyte solution at 25°C was 0.014 S/cm;

$$K_1 = \frac{Da}{Dc}, \text{ and } K_2 = \frac{Ca}{Dc},$$

Equation 1 was: $1.0337 + 0.37 \times CWc - 7.79 \times \rho \le K_1 \le 1.07 + 0.93 \times CWc - 2.9 \times \rho.$

Equation 2 was: $1.1485 + 0.43 \times CWc - 9.2 \times \rho \le K_2 \le 1.13 + 1.069 \times CWc - 1.7 \times \rho.$

(3) Normal temperature cycling performance test of lithium secondary battery

At 25°C, the lithium secondary battery was firstly charged at a constant current of 1 C (i.e., the current value of theoretical capacity being completely discharged within 1 h) to a voltage of 3.65 V, then charged at a constant voltage of 3.65 V until the current was 0.05C, allowed to stand for 5 min, and then discharged at a constant current of 1 C to a voltage of 2.5 V, which was one charge and discharge cycle. The discharge capacity at this point was the discharge capacity of the first cycle. The lithium secondary battery was subjected to multiple cycle charge and discharge tests according to the aforementioned method until the discharge capacity of the lithium secondary battery decayed to 80%, and the number of cycles of the lithium secondary battery was recorded.

**Examples 2-10 and Comparative Examples 1-7**

The difference between Comparative Examples 1-2 and Example 1 was that: the areal density CWc (unit: g/1540.25 $mm^2$) of the positive-electrode active material layer located on a single side of the positive electrode plate was different, and see Table 1 for details.
The difference between Example 2 and Example 1 was that: the areal density CWc (unit: g/1540.25 $mm^2$) of the positive-electrode active material layer located on a single side of the positive electrode plate was different, and see Table 1 for details.
The difference between Example 3 and Example 1 was that: the areal density CWc (unit: g/1540.25 $mm^2$) of the positive-electrode active material layer located on a single side of the positive electrode plate was different, the areal density CWa (unit: g/1540.25 $mm^2$) of the negative-electrode active material layer on the side of the negative electrode plate away from the positive electrode plate was different, and see Table 1 for details.
The difference between Example 4 and Example 1 was that: the conductivity $\rho$ (unit: S/cm) of the electrolyte solution at 25°C was different, and see Table 1 for details.
The difference between Comparative Example 3 and Example 1 was that: the areal density CWa (unit: g/1540.25 $mm^2$) of the negative-electrode active material layer on the side of the negative electrode plate away from the positive electrode plate was different, and see Table 1 for details.
The difference between Example 5 and Example 1 was that: the areal density CWc (unit: g/1540.25 $mm^2$) of the positive-electrode active material layer located on a single side of the positive electrode plate was different, the areal density CWa (unit: g/1540.25 $mm^2$) of the negative-electrode active material layer on the side of the negative electrode plate away from the positive electrode plate was different, and see Table 1 for details.
The difference between Example 6 and Example 1 was that: the areal density CWc (unit: g/1540.25 $mm^2$) of the positive-electrode active material layer located on a single side of the positive electrode plate was different, and see Table 1 for details.
The difference between Examples 7-8 and Example 1 was that: the areal density CWa (unit: g/1540.25 $mm^2$) of the negative-electrode active material layer on the side of the negative electrode plate away from the positive electrode plate was different, the reversible lithiation capacity (unit: mAh/g) of the artificial graphite, and see Table 1 for details.
The difference between Comparative Example 4 and Example 1 was that: the areal density CWc (unit: g/1540.25 $mm^2$) of the positive-electrode active material layer located on a single side of the positive electrode plate was different, the areal density CWa (unit: g/1540.25 $mm^2$) of the negative-electrode active material layer on the side of the negative electrode plate away from the positive electrode plate was different, and see Table 1 for details.
The difference between Comparative Example 5 and Example 1 was that: the areal density CWc (unit: g/1540.25 $mm^2$) of the positive-electrode active material layer located on a single side of the positive electrode plate was different, the conductivity $\rho$ (unit: S/cm) of the electrolyte solution at 25°C was different, and see Table 1 for details.
The difference between Example 9 and Example 1 was that: the positive-electrode active material in the positive electrode plate was $LiFe_{0.4}Mn_{0.6}PO_4$ (with a gram capacity of 156 mAh/g), and the areal density CWc (unit: g/1540.25

mm$^2$) of the positive-electrode active material layer on a single side of the positive electrode plate was different.

The difference between Example 10 and Example 1 was that: the positive-electrode active material in the positive electrode plate was LiFe$_{0.8}$Mn$_{0.2}$PO$_4$ (with a gram capacity of 158 mAh/g), and the areal density CWc (unit: g/1540.25 mm$^2$) of the positive-electrode active material layer on a single side of the positive electrode plate was different.

The difference between Comparative Example 6 and Example 1 was that: the positive-electrode active material in the positive electrode plate was LiFe$_{0.4}$Mn$_{0.6}$PO$_4$, and the areal density CWc (unit: g/1540.25 mm$^2$) of the positive-electrode active material layer on a single side of the positive electrode plate was different.

The difference between Comparative Example 7 and Example 1 was that: the positive-electrode active material in the positive electrode plate was LiFe$_{0.8}$Mn$_{0.2}$PO$_4$, and the areal density CWc (unit: g/1540.25 mm$^2$) of the positive-electrode active material layer on a single side of the positive electrode plate was different.

The lithium secondary batteries assembled in Examples 1-10 and Comparative Examples 1-7 were tested. The detailed test results were shown in Table 1.

Table 1 Differences among Examples 1-8 and Comparative Examples 1-5 and related testing results

| Item | CWc | CWa | Reversible lithiation capacity of artificial graphite (mAh/g) | Dc | Da | Ca | $\rho$ | $K_2$ | $K_1$ | The lower limit of $K_2$ calculated by equation 2 | The upper limit of $K_2$ calculated by equation 2 | The lower limit of $K_1$ calculated by equation 1 | The upper limit of $K_1$ calculated by equation 1 | The number of cycles corresponding to decay in discharge capacity to 80% |
|---|---|---|---|---|---|---|---|---|---|---|---|---|---|---|
| Comparative Example 1 | 0.287 | 0.137 | 333 | 43.16 48 | 43.34 00 | 48.15 55 | 0.0 14 | 1.1 15 6 | 1.0 04 1 | 1.1431 | 1.4130 | 1.0308 | 1.2963 | 3980 |
| Comparative Example 2 | 0.209 | 0.137 | 333 | 31.43 36 | 43.34 00 | 48.15 55 | 0.0 14 | 1.5 32 0 | 1.3 78 8 | 1.1096 | 1.3296 | 1.0020 | 1.2238 | 6211 |
| Example 1 | 0.256 | 0.137 | 333 | 38.50 24 | 43.34 00 | 48.15 55 | 0.0 14 | 1.2 50 7 | 1.1 25 6 | 1.1298 | 1.3799 | 1.0194 | 1.2675 | 5795 |
| Example 2 | 0.236 | 0.137 | 333 | 35.49 44 | 43.34 00 | 48.15 55 | 0.0 14 | 1.3 56 7 | 1.2 21 0 | 1.1212 | 1.3585 | 1.0120 | 1.2489 | 6180 |
| Example 3 | 0.256 | 0.142 | 333 | 38.50 24 | 44.92 17 | 49.91 30 | 0.0 14 | 1.2 96 4 | 1.1 66 7 | 1.1298 | 1.3799 | 1.0194 | 1.2675 | 5945 |
| Example 4 | 0.256 | 0.137 | 333 | 38.50 24 | 43.34 00 | 48.15 55 | 0.0 07 | 1.2 50 7 | 1.1 25 6 | 1.1942 | 1.3918 | 1.0739 | 1.2878 | 1003 |
| Comparative Example 3 | 0.256 | 0.117 | 333 | 38.50 24 | 37.01 30 | 41.12 55 | 0.0 14 | 1.0 68 1 | 0.9 61 3 | 1.1298 | 1.3799 | 1.0194 | 1.2675 | 4511 |
| Example 5 | 0.626 | 0.364 | 333 | 94.15 04 | 115.1 514 | 127.9 46 | 0.0 14 | 1.3 59 0 | 1.2 23 1 | 1.2889 | 1.7754 | 1.1563 | 1.6116 | 503 |
| Example 6 | 0.232 | 0.137 | 333 | 34.89 28 | 43.34 00 | 48.15 55 | 0.0 14 | 1.3 80 1 | 1.2 42 1 | 1.1195 | 1.3542 | 1.0105 | 1.2452 | 6102 |
| Example 7 | 0.24 | 0.137 | 350 | 36.09 6 | 45.55 25 | 48.15 55 | 0.0 14 | 1.3 34 1 | 1.2 62 0 | 1.1229 | 1.3628 | 1.0134 | 1.2526 | 5992 |
| Example 8 | 0.26 | 0.137 | 350 | 39.10 4 | 45.55 25 | 48.15 55 | 0.0 14 | 1.2 31 5 | 1.1 64 9 | 1.1315 | 1.3841 | 1.0208 | 1.2712 | 5990 |
| Comparative Example 4 | 0.66 | 0.364 | 333 | 99.26 4 | 115.1 514 | 127.9 46 | 0.0 14 | 1.2 88 9 | 1.1 60 1 | 1.3035 | 1.8117 | 1.1688 | 1.6432 | 412 |
| Comparative Example 5 | 0.27 | 0.137 | 333 | 40.60 8 | 43.34 00 | 48.15 55 | 0.0 07 | 1.1 85 9 | 1.0 67 3 | 1.2002 | 1.4067 | 1.0791 | 1.3008 | 713 |
| Example 9 | 0.245 | 0.137 | 333 | 35.92 68 | 43.34 00 | 48.15 55 | 0.0 14 | 1.3 40 38 | 1.2 06 34 | 1.12505 | 1.3681 | 1.0153 | 1.2573 | 3210 |
| Comparative Example 7 | 0.29 | 0.137 | 333 | 42.52 56 | 43.34 00 | 48.15 55 | 0.0 14 | 1.1 32 39 | 1.0 19 15 | 1.1444 | 1.4162 | 1.0319 | 1.2991 | 2020 |
| Example 10 | 0.245 | 0.137 | 333 | 36.38 74 | 43.34 00 | 48.15 55 | 0.0 14 | 1.3 23 41 | 1.1 91 07 | 1.12505 | 1.3681 | 1.0153 | 1.2573 | 4080 |
| Comparative Example 8 | 0.29 | 0.137 | 333 | 43.07 08 | 43.34 00 | 48.15 55 | 0.0 14 | 1.1 18 05 | 1.0 06 25 | 1.1444 | 1.4162 | 1.0319 | 1.2991 | 2320 |

Table 2 Analysis on Cyclic Test Results of Examples 1-10 and Comparative Examples 1-7

| Item | $K_2$ | $K_1$ | The lower limit of $K_2$ calculated by equation 2 | The upper limit of $K_2$ calculated by equation 2 | The lower limit of $K_1$ calculated by equation 1 | The upper limit of $K_1$ calculated by equation 1 | The number of cycles corresponding to decay in discharge capacity to 80% | Results and Analysis |
|---|---|---|---|---|---|---|---|---|
| Comparative Example 1 | 1.11 56 | 1.00 41 | 1.1431 | 1.4130 | 1.0308 | 1.2963 | 3980 | $K_1$ and $K_2$ were both outside the range specified by the equations 1 and 2, and were both smaller than the specified lower limit. Reason: the areal density CWc of the positive-electrode active material layer located on a single side of the positive electrode plate was larger than those of Examples 1-2, so that both $K_1$ and $K_2$ became smaller and were lower than the specified lower limit. |
| Comparative Example 2 | 1.53 20 | 1.37 88 | 1.1096 | 1.3296 | 1.0020 | 1.2238 | 6211 | $K_1$ and $K_2$ were both outside the range specified by the equations 1 and 2, and were both greater than the specified upper limit. The cycle life was not significantly improved compared with that of Example 2. Reason: the areal density CWc of the positive-electrode active material layer located on a single side of the positive electrode plate was smaller than those of Examples 1-2, so that both $K_1$ and $K_2$ became larger and were higher than the specified upper limit. Although the cost and energy density were sacrificed at this time, the cycle life was not significantly improved compared with that of Example 2. |
| Example 1 | 1.25 07 | 1.12 56 | 1.1298 | 1.3799 | 1.0194 | 1.2675 | 5795 | $K_1$ and $K_2$ were both within the range specified by the equations 1 and 2, and the cycle life was better. |
| Example 2 | 1.35 67 | 1.22 10 | 1.1212 | 1.3585 | 1.0120 | 1.2489 | 6180 | $K_1$ and $K_2$ were both within the range specified by the equations 1 and 2. The areal density CWc of the positive-electrode active material layer located on a single side of the positive electrode plate became smaller, so that $K_1$ and $K_2$ both became larger within the allowable range, and the cycle life was better. |
| Example 3 | 1.29 64 | 1.16 67 | 1.1298 | 1.3799 | 1.0194 | 1.2675 | 5945 | $K_1$ and $K_2$ were both within the range specified by the equations 1 and 2. The areal density CWa of the negative-electrode active material layer on the side of the negative electrode plate away from the positive electrode plate was larger than that of Example 1, so that $K_1$ and $K_2$ both became larger, and the cycle life was better. |

(continued)

| Item | $K_2$ | $K_1$ | The lower limit of $K_2$ calculated by equation 2 | The upper limit of $K_2$ calculated by equation 2 | The lower limit of $K_1$ calculated by equation 1 | The upper limit of $K_1$ calculated by equation 1 | The number of cycles corresponding to decay in discharge capacity to 80% | Results and Analysis |
|---|---|---|---|---|---|---|---|---|
| Example 4 | 1.25 07 | 1.12 56 | 1.1942 | 1.3918 | 1.0739 | 1.2878 | 1003 | $K_1$ and $K_2$ were both within the range specified by the equations 1 and 2, but compared with Example 1, the cycle life was poor. The reason was mainly that: the conductivity of the electrolyte solution was low, which affected the cycle life of the lithium secondary battery; however, compared with Comparative Example 5, the cycle life was better, indicating that on the basis of consistency of the conductivity of electrolyte solution, the electrode plate material, the separator, etc., satisfying the equations 1 and 2 could improve the cycle life of the lithium secondary battery. |
| Comparative Example 3 | 1.06 81 | 0.96 13 | 1.1298 | 1.3799 | 1.0194 | 1.2675 | 4511 | $K_1$ and $K_2$ were both outside the range specified by the equations 1 and 2, and were both smaller than the specified lower limit. Reason: the areal density CWa of the negative-electrode active material layer on the side of the negative electrode plate away from the positive electrode plate was smaller than that of Example 1, so that both $K_1$ and $K_2$ became smaller and were lower than the specified lower limit, which affected the cycle life. |
| Example 5 | 1.35 90 | 1.22 31 | 1.2889 | 1.7754 | 1.1563 | 1.6116 | 503 | $K_1$ and $K_2$ were both within the range specified by the equations 1 and 2. However, since the areal density CWc of the positive-electrode active material layer on a single side of the positive electrode plate was relatively larger (and the areal density of the negative-electrode active material layer on the side of the negative electrode plate away from the positive electrode plate was also relatively larger), the lithium secondary battery is highly polarized and polarization grown rapidly, resulting in a deterioration in the cycle life. However, its cycle life was still significantly better than that of Comparative Example 4, indicating that on the basis of consistency of the conductivity of the electrolyte solution, the electrode plate material, the separator, etc., satisfying the equations 1 and 2 could improve the cycle life of the lithium secondary battery. |

| Item | $K_2$ | $K_1$ | The lower limit of $K_2$ calculated by equation 2 | The upper limit of $K_2$ calculated by equation 2 | The lower limit of $K_1$ calculated by equation 1 | The upper limit of $K_1$ calculated by equation 1 | The number of cycles corresponding to decay in discharge capacity to 80% | Results and Analysis |
|---|---|---|---|---|---|---|---|---|
| Example 6 | 1.38 01 | 1.24 21 | 1.1195 | 1.3542 | 1.0105 | 1.2452 | 6102 | $K_1$ was within the range specified by the equation 1, and $K_2$ was not within the range specified by the equation 2. The cycle life of the lithium secondary battery was better than that of Example 1. However, when the value of $K_1$ was further increased, its cycle life was no longer significantly improved. The analyzed reason may be that: the value was close to the upper limit of the equation 1. |
| Example 7 | 1.33 41 | 1.26 20 | 1.1229 | 1.3628 | 1.0134 | 1.2526 | 5992 | $K_1$ was not within the range specified by the equation 1, and $K_2$ was within the range specified by the equation 2. The cycle life of the lithium secondary battery was better than that of Example 1. However, when the value of $K_2$ was further increased, the effect of improving its cycle life was not obvious. The analyzed reason may be that: the value of $K_2$ was close to the upper limit of the equation 2. |
| Example 8 | 1.23 15 | 1.16 49 | 1.1315 | 1.3841 | 1.0208 | 1.2712 | 5990 | $K_1$ and $K_2$ were both within the range specified by the equations 1 and 2, and the cycle life of the lithium secondary battery was better. |
| Comparative Example 4 | 1.28 89 | 1.16 01 | 1.3035 | 1.8117 | 1.1688 | 1.6432 | 412 | Compared with Example 5, $K_1$ and $K_2$ were both outside the range specified by the equations 1 and 2, and were both smaller than the specified lower limit. The cycle life was poor. |
| Comparative Example 5 | 1.18 59 | 1.06 73 | 1.2002 | 1.4067 | 1.0791 | 1.3008 | 713 | Compared with Example 4, $K_1$ and $K_2$ were both outside the range specified by the equations 1 and 2, and were both smaller than the specified lower limit. The cycle life was poor. |
| Example 9 | 1.34 038 | 1.20 634 | 1.12505 | 1.3681 | 1.0153 | 1.2573 | 3210 | $K_1$ and $K_2$ were both within the ranges specified by the equations 1 and 2. The main reason its cycle life was lower than that of Example 1 was that the types of positive-electrode active materials were different. |

(continued)

| Item | $K_2$ | $K_1$ | The lower limit of $K_2$ calculated by equation 2 | The upper limit of $K_2$ calculated by equation 2 | The lower limit of $K_1$ calculated by equation 1 | The upper limit of $K_1$ calculated by equation 1 | The number of cycles corresponding to decay in discharge capacity to 80% | Results and Analysis |
|---|---|---|---|---|---|---|---|---|
| Comparative Example 7 | 1.13 239 | 1.01 915 | 1.1444 | 1.4162 | 1.0319 | 1.2991 | 2020 | Compared with Example 9, $K_1$ and $K_2$ were both outside the range specified by the equations 1 and 2, and were both smaller than the specified lower limit. The cycle life was poor. |
| Example 10 | 1.32 341 | 1.19 107 | 1.12505 | 1.3681 | 1.0153 | 1.2573 | 4080 | $K_1$ and $K_2$ were both within the ranges specified by the equations 1 and 2. The main reason its cycle life was lower than that of Example 1 was that the types of positive-electrode active materials were different. |
| Comparative Example 8 | 1.11 805 | 1.00 625 | 1.1444 | 1.4162 | 1.0319 | 1.2991 | 2320 | Compared with Example 10, $K_1$ and $K_2$ were both outside the range specified by the equations 1 and 2, and were both smaller than the specified lower limit. The cycle life was poor. |

Results and conclusion:

Based on Examples 1-10 and Comparative Examples 1-7, as well as Tables 1 and 2, it can be seen that on the basis of consistency of the positive electrode plate material, the negative electrode plate material, the electrolyte solution, and the separator of the lithium secondary battery, when the equations 1 and/or 2 are satisfied, the cycle life of the lithium secondary battery can be significantly improved. Moreover, appropriately increasing $K_1$ and/or $K_2$ is beneficial to improving the cycle life of the battery, but too high a value will sacrifice performance in terms of cost and energy density, etc. Further, during preparation of a lithium secondary battery, selecting an electrolyte solution with relatively larger conductivity is also beneficial to improving the cycling performance of the battery. On this basis, further satisfying the equations 1 and 2 is beneficial to further optimizing the cycle life. Moreover, during preparation of a lithium secondary battery, the cycle life of the lithium secondary battery can also be further improved by further optimizing the selection of the positive-electrode active material, the areal density and/or reversible lithium capacity of the positive-electrode active material layer, the first lithiation capacity and/or reversible lithium capacity of the negative-electrode active material layer, the matching relationship between the areal density of the positive-electrode active material and the areal density of the negative-electrode active material, etc. On this basis, further satisfying the equations 1 and 2 is also conducive to further optimizing the cycle life.

Finally, it should be noted that the aforementioned embodiments are only used for explaining the technical solution of the present application, and not for limiting the present application. Although the present application has been described in detail with reference to the aforementioned embodiments, it should understand by those of ordinary skills in the art that the technical solutions described in the aforementioned embodiments can still be modified, or some or all of the technical features can be equivalently replaced. The modifications or replacements do not deviate the nature of the corresponding technical solutions from the scope of the embodiments of the present application, and should all be included in the scope of the claims and specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A lithium secondary battery, comprising:

   a positive electrode plate comprising a positive-electrode current collector and a positive-electrode active material layer arranged on at least one side of the positive-electrode current collector, wherein the positive-electrode active material layer comprises a positive-electrode active material $Li_{1+a}M_{1b}Fe_{1-c}A_cP_{1-d}E_dO_4$, wherein $-0.100 \leq a \leq 0.100$, $0 \leq b \leq 1.1$, $0 \leq c \leq 1$, $0 \leq d \leq 0.100$, $M_1$ comprises one or more elements selected from Zn, Al, Na, K, Mg, Nb, Mo and W, A comprises one or more elements selected from Mn, Zn, Al, Na, K, Mg, Mo, W, Ti, V, Zr, Ga, Sn, Sb, Nb and Ge, E comprises one or more elements selected from B, Si, N, S, F, Cl and Br, and a mass ratio of the $Li_{1+a}M_{1b}Fe_{1-c}A_cP_{1-d}E_dO_4$ in the positive-electrode active material layer is not less than 85 wt%;
   a negative electrode plate comprising a negative-electrode current collector and a negative-electrode active material layer arranged on at least one side of the negative-electrode current collector, wherein the negative-electrode active material layer comprises graphite, and a mass ratio of the graphite in the negative-electrode active material layer is not less than 85 wt%,
   wherein the positive-electrode active material layer located on a single side of the positive electrode plate has an areal density of CWc in g/1540.25 mm$^2$, and a reversible lithium capacity of Dc in mAh/1540.25 mm$^2$; the negative-electrode active material layer on the side of the negative electrode plate facing the positive electrode plate has a reversible lithium capacity of Da in mAh/1540.25 mm$^2$; the negative-electrode active material layer on the side of the negative electrode plate away from the positive electrode plate has a first lithiation capacity of Ca in mAh/1540.25 mm$^2$; and the lithium secondary battery satisfies:

$$\text{equation 1: } 1.0337 + 0.37 \times \text{CWc} - 7.79 \times \rho \leq K_1 \leq 1.07 + 0.93 \times \text{CWc} - 2.9 \times \rho;$$

and/or,

$$\text{equation 2: } 1.1485 + 0.43 \times \text{CWc} - 9.2 \times \rho \leq K_2 \leq 1.13 + 1.069 \times \text{CWc} - 1.7 \times \rho;$$

wherein $K_1 = \dfrac{Da}{Dc}$, $K_2 = \dfrac{Ca}{Dc}$, and $\rho$ is the conductivity of an electrolyte solution of the lithium secondary battery at 25°C, in S/cm.

2. The lithium secondary battery according to claim 1, wherein the $Li_{1+a}M_{1b}Fe_{1-c}A_cP_{1-d}E_dO_4$ comprises at least one of positive-electrode active materials corresponding to the following three conditions:

(1) c = 0;
(2) c = 1, and A is Mn element;
(3) 0 < c < 1, and A is Mn element.

3. The lithium secondary battery according to claim 1, wherein the $Li_{1+a}M_{1b}Fe_{1-c}A_cP_{1-d}E_dO_4$ comprises $LiFe_{1-c}Mn_cPO_4$, wherein $0 \leq c \leq 1$.

4. The lithium secondary battery according to any one of claims 1-3, wherein $0.25 \leq CWc \leq 0.6$, optionally $0.26 \leq CWc \leq 0.5$.

5. The lithium secondary battery according to any one of claims 1-4, wherein a value range of $\rho$ is 0.008-0.020, optionally 0.009-0.016.

6. The lithium secondary battery according to any one of claims 1-5, wherein the viscosity of the electrolyte solution at 25°C is 1.5 mPa·s-5 mPa·s, optionally 2 mPa·s-4 mPa·s.

7. The lithium secondary battery according to any one of claims 1-6, wherein the negative-electrode active material layer on the side of the negative electrode plate facing the positive electrode plate has an areal density of CWa in g/1540.25 mm², wherein $1.6 \leq \dfrac{CWc}{CWa} \leq 6$, optionally, $1.8 \leq \dfrac{CWc}{CWa} \leq 3$.

8. The lithium secondary battery according to any one of claims 1-7, wherein the positive-electrode active material in the positive-electrode active material layer further comprises one or more of a ternary nickel-cobalt-manganese material, lithium cobaltate, $Li_2O_2$, lithium manganate, lithium nickelate, and lithium vanadate; and/or
the negative-electrode active material in the negative-electrode active material layer further comprises one or more of hard carbon, soft carbon, mesocarbon microbeads, lithium titanate, carbon fiber, a silicon-based material, and a tin-based material.

9. The lithium secondary battery according to any one of claims 1-8, wherein based on a total mass of the positive-electrode active material in the positive-electrode active material layer, the content of the $Li_{1+a}M_{1b}Fe_{1-c}A_cP_{1-d}E_dO_4$ is not less than 94 wt%; and/or
based on a total mass of the negative-electrode active material in the negative-electrode active material layer, the content of the graphite is not less than 85 wt%.

10. The lithium secondary battery according to any one of claims 1-9, wherein the graphite satisfies at least one of the following conditions:

an OI value of the graphite is 0.5-7, optionally 2-4.5;
a BET specific surface area of the graphite is 0.8 m²/g-1.5 m²/g;
the graphitization degree of the graphite is 70%-99%, optionally 75%-98%; and
a Dv50 particle size of the graphite is 1 μm-20 μm, optionally 4 μm-15 μm.

11. The lithium secondary battery according to any one of claims 1-10, wherein the graphite is artificial graphite.

12. The lithium secondary battery according to any one of claims 1-11, wherein the thickness of the positive electrode plate is 130 μm-350 μm, and the thickness of the negative electrode plate is 100 μm-300 μm.

13. The lithium secondary battery according to any one of claims 1-12, wherein $1.036 \leq K_1 \leq 1.308$, and/or $1.149 \leq K_2 \leq 1.427$.

**14.** An electrical apparatus, comprising the lithium secondary battery according to any one of claims 1-13.

FIG. 1

FIG. 2

FIG. 3

**FIG. 4**

## INTERNATIONAL SEARCH REPORT

| International application No. |
| --- |
| **PCT/CN2023/085249** |

### A. CLASSIFICATION OF SUBJECT MATTER

H01M4/136(2010.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 宁德, 电导, 导电, 面密度, 电解液, 可逆, 循环, 首次, 容量, conductivity, capacity

### C. DOCUMENTS CONSIDERED TO BE RELEVANT

| Category* | Citation of document, with indication, where appropriate, of the relevant passages | Relevant to claim No. |
| --- | --- | --- |
| X | CN 110896143 A (NINGDE CONTEMPORARY AMPEREX TECHNOLOGY CO., LTD.) 20 March 2020 (2020-03-20) description, paragraphs [0005]-[0180] | 1-14 |
| A | CN 110212193 A (NINGDE CONTEMPORARY AMPEREX TECHNOLOGY CO., LTD.) 06 September 2019 (2019-09-06) entire document | 1-14 |
| A | CN 114938689 A (NINGDE AMPEREX TECHNOLOGY LTD.) 23 August 2022 (2022-08-23) entire document | 1-14 |
| A | CN 115275319 A (JIANGSU ZENERGY BATTERY TECHNOLOGIES CO., LTD.) 01 November 2022 (2022-11-01) entire document | 1-14 |
| A | CN 115842094 A (NINGDE CONTEMPORARY AMPEREX TECHNOLOGY CO., LTD.) 24 March 2023 (2023-03-24) entire document | 1-14 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 October 2023** | **05 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/085249**

| Patent document cited in search report | | | Publication date (day/month/year) | Patent family member(s) | | | Publication date (day/month/year) |
|---|---|---|---|---|---|---|---|
| CN | 110896143 | A | 20 March 2020 | EP | 3624237 | A2 | 18 March 2020 |
| | | | | EP | 3624237 | A3 | 15 April 2020 |
| | | | | US | 2020091558 | A1 | 19 March 2020 |
| | | | | US | 11239501 | B2 | 01 February 2022 |
| CN | 110212193 | A | 06 September 2019 | EP | 3761436 | A1 | 06 January 2021 |
| | | | | EP | 3761436 | A4 | 21 April 2021 |
| | | | | EP | 3761436 | B1 | 20 April 2022 |
| | | | | JP | 2021516417 | A | 01 July 2021 |
| | | | | JP | 7104163 | B2 | 20 July 2022 |
| | | | | WO | 2019165795 | A1 | 06 September 2019 |
| | | | | US | 2021050617 | A1 | 18 February 2021 |
| | | | | KR | 20200118193 | A | 14 October 2020 |
| | | | | KR | 102463995 | B1 | 04 November 2022 |
| CN | 114938689 | A | 23 August 2022 | KR | 20220138006 | A | 12 October 2022 |
| | | | | WO | 2023087209 | A1 | 25 May 2023 |
| CN | 115275319 | A | 01 November 2022 | None | | | |
| CN | 115842094 | A | 24 March 2023 | None | | | |

Form PCT/ISA/210 (patent family annex) (July 2022)